# EUROPÄISCHE PATENTSCHRIFT

(11) **EP 3 556 641 B1**
(45) Veröffentlichungstag und Bekanntmachung des Hinweises auf die Patenterteilung: **09.03.2022**
(21) Anmeldenummer: 19168220.2
(22) Anmeldetag: 09.04.2019
(51) Int. Cl.: B62D 6/00, B62D 5/00, A01B 69/00, B62D 5/04

(54) **VERFAHREN ZUR BEEINFLUSSUNG DER LENKCHARAKTERISTIK EINES LANDWIRTSCHAFTLICHEN TRAKTORS**
METHOD FOR INFLUENCING THE STEERING CHARACTERISTICS OF AN AGRICULTURAL TRACTOR
PROCÉDÉ D'INFLUENCE DES CARACTÉRISTIQUES DE DIRECTION D'UN TRACTEUR AGRICOLE

(30) Priorität: 13.04.2018 DE 102018205674
(43) Veröffentlichungstag der Anmeldung: 23.10.2019
(73) Patentinhaber: Deere & Company, Moline, IL 61265 (US)
(72) Erfinder: Lehmann, Philipp, 68163 Mannheim (DE); Daubermann, Julian, 68163 Mannheim (DE)
(74) Vertreter: Dehnhardt, Florian Christopher

(56) Entgegenhaltungen:
- EP-A1- 3 351 080
- DE-A1-102009 044 998
- US-A1- 2009 143 941
- US-A1- 2010 004 825

## Beschreibung

Die Erfindung bezieht sich auf ein Verfahren zur Beeinflussung der Lenkcharakteristik eines landwirtschaftlichen Traktors. Die gezielte Beeinflussung der Lenkcharakteristik einer Fahrzeuglenkung ist aus dem Automobilbereich unter der Bezeichnung "Parameterlenkung" seit längerem bekannt. Bei einer derartigen Parameterlenkung wird typischerweise die Lenkübersetzung eines zur fahrerseitigen Betätigung der Fahrzeuglenkung vorgesehenen Lenkrads in Abhängigkeit fahrdynamischer Größen, üblicherweise der momentanen Fahrtgeschwindigkeit des Fahrzeugs, angepasst. Die Anpassung erfolgt derart, dass auch bei höheren Fahrtgeschwindigkeiten auf einer Autobahn im Falle unbedachter Lenkradbetätigungen ein stabiles Fahrverhalten beibehalten wird.

Ein Verfahren zur Beeinflussung einer Lenkcharakteristik eines landwirtschaftlichen Traktors gemäß dem Oberbegriff des Anspruchs 1 ist in dem Patentdokument US 2010/004825 A1 offenbart.

Es ist Aufgabe der vorliegenden Erfindung, ein an die Verwendung im landwirtschaftlichen Bereich angepasstes Verfahren der eingangs genannten Art anzugeben.

Diese Aufgabe wird durch ein Verfahren zur Beeinflussung der Lenkcharakteristik eines landwirtschaftlichen Traktors mit den Merkmalen des Patentanspruchs 1 gelöst.

Das erfindungsgemäße Verfahren zur Beeinflussung der Lenkcharakteristik eines landwirtschaftlichen Traktors, der ein Lenkrad zur fahrerseitigen Vorgabe eines Radstellwinkels lenkbarer Traktorräder sowie eine Stelleinrichtung zur Erzeugung einer nach Maßgabe eines auswählbaren Parametersatzes anpassbaren Lenkcharakteristik aufweist, sieht vor, dass von einer Kontrolleinheit ein momentaner Arbeitszustand des landwirtschaftlichen Traktors erfasst sowie ein für den momentanen Arbeitszustand spezifischer Parametersatz zur Anpassung der Lenkcharakteristik aus einer Vielzahl vorgegebener Parametersätze ausgewählt wird.

Mit anderen Worten wird die Lenkcharakteristik durch geeignete Ansteuerung der Stelleinrichtung spezifisch an die jeweilige Arbeitssituation des landwirtschaftlichen Traktors angepasst. Jedem der vorgegebenen Parametersätze ist dabei eine bestimmte Lenkcharakteristik zugeordnet. Die Parametersätze können derart vorgegeben werden, dass diese die im Betriebsalltag des landwirtschaftlichen Traktors üblicherweise auftretenden Arbeitssituationen abdecken.

Vorteilhafte Weiterbildungen des erfindungsgemäßen Verfahrens gehen aus den Unteransprüchen hervor.

Vorzugsweise wird jeder der vorgegebenen Parametersätze seitens der Kontrolleinheit durch einen oder mehrere Einzelparameter charakterisiert, wobei die Einzelparameter durch eine variable Lenkübersetzung zwischen dem Lenkrad und den lenkbaren Traktorrädern und/oder eine die Lenkradbetätigung überlagernde Betätigungskraft veränderbarer Größe und/oder eine variable Position lenkungsbegrenzender Endanschläge gegeben sind.

Die Lenkübersetzung beschreibt hierbei das Verhältnis zwischen einem sich aus der Stellung des Lenkrads ergebenden Einschlagwinkel und dem an den lenkbaren Traktorrädern hervorgerufenen Radstellwinkel.

Die mittels der Stelleinrichtung überlagerbare Betätigungskraft führt je nach ihrem Vorzeichen zu einem eine Lenkradbetätigung erschwerenden Lenkwiderstand oder aber zu einer diese begünstigenden Lenkerleichterung. Letztere kann von der Stelleinrichtung durch einen abnehmenden Lenkwiderstand erzeugt werden.

Die lenkungsbegrenzenden Endanschläge sind im einfachsten Fall durch mechanische Stoppelemente gebildet, deren Position mittels der Stelleinrichtung verändert werden kann. Andererseits können diese von der Stelleinrichtung auch durch Aufbau von im jeweiligen Endanschlagsbereich steil ansteigenden Betätigungskräften simuliert werden.

Die vorgenannten Lenkeingriffe äußern sich ausschließlich unter der Einwirkung einer vom Fahrer auf das Lenkrad ausgeübten Bedienkraft, diese sind somit rein passiver Natur. Der Fahrer kann im Gegensatz zu aktiv durchgeführten Lenkeingriffen, wie sie insbesondere bei autonomen Fahrzeugsteuersystemen vorgesehen sind, stets in die Lenkung des landwirtschaftlichen Traktors korrigierend eingreifen. Die gemäß dem ausgewählten Parametersatz ausgeführten Lenkeingriffe weisen insofern lediglich einen fahrerunterstützenden (haptischen) Hinweischarakter auf.

Typischerweise wird der momentane Arbeitszustand von der Kontrolleinheit hinsichtlich des Vorliegens von mit der Durchführung von Transport-, Feld- und/oder Ladearbeiten des landwirtschaftlichen Traktors in Zusammenhang stehenden Betriebsinformationen erfasst.

Bei den Betriebsinformationen kann es sich beispielsweise um kartografische Informationen, den Arbeitszustand eines an dem landwirtschaftlichen Traktor angebrachten Anbaugeräts, Angaben hinsichtlich des Anbaugerätetyps, der momentanen Fahrtgeschwindigkeit des landwirtschaftlichen Traktors, des Aktivierungszustands eines Vorgewendemanagements, einer einzuhaltenden Fahrspur auf einem Feld, und dergleichen handeln. Die entsprechenden Daten stehen der Kontrolleinheit beispielsweise auf einem CAN-Datenbus des landwirtschaftlichen Traktors oder einem mit einer Anbaugerätesteuerung kommunizierenden ISOBUS-Datenbus zur Verfügung.

So kann anhand kartografischer Informationen durch Abgleich mit der momentanen Position des landwirtschaftlichen Traktors auf das Befahren einer Straße einschließlich der Straßenart, mithin auf die Durchführung einer Straßentransportfahrt geschlossen werden. Zusätzlich kann eine für eine Straßentransportfahrt typische Fahrtgeschwindigkeit des landwirtschaftlichen Traktors als Indikator herangezogen werden. In diesem Fall wird die Lenkcharakteristik mittels der Stelleinrichtung dahingehend angepasst, dass ein mit der Lenkradauslenkung sowie der momentanen Fahrtgeschwindigkeit zunehmender Lenkwiderstand aufgebaut wird. Da abrupt durchgeführte Lenkradbetätigungen gedämpft werden, wirkt dies stabilisierend auf die Fahreigenschaften des landwirtschaftlichen Traktors. Daneben ist es denkbar, die Lenkübersetzung zu verringern, sodass ein entsprechend gutmütiges Lenkverhalten erzielt wird.

Wird hingegen durch Vergleich der kartografischen Informationen mit der momentanen Position des landwirtschaftlichen Traktors auf das Befahren eines Felds sowie ferner aufgrund des Arbeitszustands eines an dem landwirtschaftlichen Traktor angebrachten Anbaugeräts auf die Durchführung bestimmter Feldarbeiten geschlossen, deren Art sich wiederum aus dem jeweiligen Anbaugerätetyp ergibt, so ist zur Erzielung gleichmäßiger Arbeitsergebnisse eine möglichst präzise Spurhaltung erwünscht. Die Anpassung der Lenkcharakteristik kann dann derart erfolgen, dass die Lenkübersetzung zur Unterdrückung übermäßiger Lenkbewegungen verringert wird, eine der einzuhaltenden Fahrspur entsprechende virtuelle Rastposition durch Erzeugung einer Betätigungskraftsenke am Lenkrad aufgebaut wird, und/oder eine von der einzuhaltenden Fahrspur wegweisende Lenkradauslenkung durch Aufbau eines zunehmenden Lenkwiderstands unterbunden bzw. deren Einhaltung durch Aufbau eines in der entgegengesetzten Lenkrichtung abnehmenden Lenkwiderstands gefördert wird. Die einzuhaltende Fahrspur ergibt sich dabei aus kartografischen Informationen sowie aus der momentanen Position des landwirtschaftlichen Traktors, wohingegen der Arbeitszustand des Anbaugeräts aus der Stellung eines Dreipunkt-Geräteanbaus, dem Betätigungszustand zugehöriger Hydrauliksteuerventile (SCVs) oder einer zum Betreiben des Anbaugeräts vorgesehenen Zapfwelle abgeleitet werden kann.

Im Vorgewende, also beim Wenden des landwirtschaftlichen Traktors am Feldrand, gelten wiederum andere Anforderungen. Um den Fahrer bei der Durchführung des Wendevorgangs zu unterstützen, ist insbesondere bei aktiviertem Vorgewendemanagement eine erhöhte Lenkübersetzung zur Verbesserung der Wendigkeit von Vorteil.

Auch ist eine Verwendung in Zusammenhang mit Ladearbeiten mit einem an dem landwirtschaftlichen Traktor angebrachten Frontlader denkbar. Auch hier wird im Hinblick auf eine verbesserte Wendigkeit des landwirtschaftlichen Traktors eine erhöhte Lenkübersetzung bevorzugt, wobei diese im Falle beengter Platzverhältnisse innerhalb eines Schuppens oder dergleichen herabgesetzt werden sowie die variable Position der lenkungsbegrenzenden Endanschläge am Lenkrad gegebenenfalls zusätzlich eingeengt werden kann. Ob sich der landwirtschaftliche Traktor gerade im Freien oder in einem Schuppen befindet, lässt sich aufgrund entsprechender kartografischer Informationen unschwer erkennen.

Abgesehen von der vorstehend dargestellten automatisierten Auswahl des Parametersatzes, ist es auch möglich, dass der momentane Arbeitszustand des landwirtschaftlichen Traktors manuell vom Fahrer über eine Bedieneinheit eingegeben werden kann, wobei von der Kontrolleinheit die Eingabe erfasst sowie anschließend der zugehörige Parametersatz zur entsprechenden Anpassung der Lenkcharakteristik ausgewählt wird.

Der Vollständigkeit halber sei erwähnt, dass die zuvor beschriebenen Arbeitssituationen lediglich beispielhafter Natur sind, vielmehr sind auch beliebige andere Fallkonstellationen denkbar.

Der entsprechend dem momentanen Arbeitszustand ausgewählte Parametersatz kann manuell über eine (weitere) Bedieneinheit initiiert werden. Der betreffende Parametersatz wird von der Kontrolleinheit beispielsweise auf einem von der Bedieneinheit umfassten Display in Form eines entsprechenden Vorschlags dargeboten. Durch Bestätigung des Vorschlags über die Bedieneinheit kann der Fahrer dann den betreffenden Parametersatz zur Ausführung des eigentlichen Lenkeingriffs aktivieren.

Abweichend davon besteht auch die Möglichkeit, dass der entsprechend dem momentanen Arbeitszustand ausgewählte Parametersatz von der Kontrolleinheit fahrerunabhängig initiiert wird. Hierzu kann die Kontrolleinheit über die Bedieneinheit insbesondere zwischen einem halbautomatischen Modus mit manueller und einem vollautomatischen Modus mit selbsttätiger Aktivierung der Lenkeingriffe umschaltbar sein.

Nach der Erfindung kann der ausgewählte Parametersatz über eine (weitere) Bedieneinheit hinsichtlich wenigstens eines Einzelparameters innerhalb vorgegebener Grenzen manuell und damit individuellen Vorlieben entsprechend konfiguriert werden.

Grenzen der Konfigurierbarkeit werden unter anderem durch Aspekte der Fahrt- oder Betriebssicherheit des landwirtschaftlichen Traktors wie auch eines daran angebrachten Anbaugeräts gesetzt.

Das erfindungsgemäße Verfahren wird im Folgenden anhand der beigefügten Zeichnungen näher erläutert. Es zeigen:
- Fig. 1: eine beispielhaft dargestellte Fahrzeugumgebung, in der das erfindungsgemäße Verfahren ausgeführt wird, und
- Fig. 2: ein Ausführungsbeispiel des erfindungsgemäßen Verfahrens in Gestalt eines Flussdiagramms.

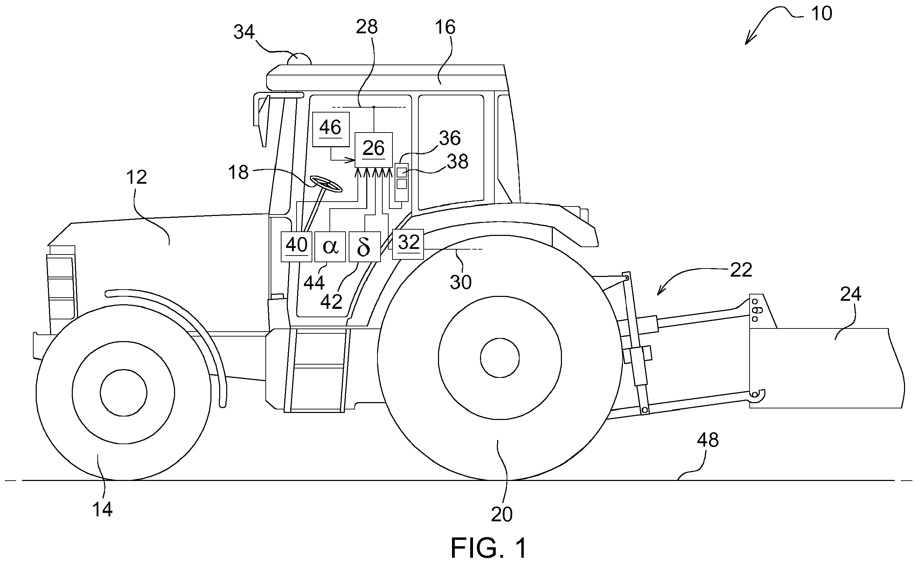

Fig. 1 zeigt eine beispielhaft dargestellte Fahrzeugumgebung, in der das erfindungsgemäße Verfahren zur Beeinflussung der Lenkcharakteristik eines landwirtschaftlichen Traktors bzw. einer von diesem umfassten Fahrzeuglenkung ausgeführt wird.

Bei der in Fig. 1 schematisch dargestellten Fahrzeugumgebung 10 handelt es sich um einen landwirtschaftlichen Traktor 12 mit lenkbaren Vorderrädern 14, deren Radstellwinkel δ sich mittels eines in einer Fahrerkabine 16 angeordneten Lenkrads 18 vorgeben lässt, mit angetriebenen Hinterrädern 20, sowie mit einem Dreipunkt-Geräteanbau 22, an dem ein nicht näher spezifiziertes Anbaugerät 24 angebracht ist.

Des Weiteren ist eine prozessorgesteuerte Kontrolleinheit 26 vorhanden, die Bestandteil einer lediglich durch einen CAN-Datenbus 28 angedeuteten Steuergerätearchitektur des landwirtschaftlichen Traktors 12 ist. Die Kontrolleinheit 26 steht mit einem ISOBUS-Datenbus 30 einer Anbaugerätesteuerung 32, einem GPS-Empfänger 34 zur Ermittlung der momentanen Position des landwirtschaftlichen Traktors 12, einer Bedieneinheit 36 mit eingebautem Display 38, insbesondere in Gestalt eines berührungsempfindlichen Bildschirms, einer Stelleinrichtung 40 zur Anpassung der Lenkcharakteristik der Fahrzeuglenkung nach Maßgabe eines auswählbaren Parametersatzes, einem Lenkwinkelsensor 44 zur Erfassung eines Lenkradwinkels a, einem Stellwinkelsensor 42 zur Erfassung des Radstellwinkels δ, und einer Speichereinheit 46 für kartografische Informationen in Verbindung. Zu den abgespeicherten kartografischen Informationen gehören insbesondere solche, die die Topografie und/oder Beschaffenheit des befahrenen Untergrunds 48 sowie den Verlauf bzw. die Art öffentlicher Straßen, Wirtschaftswege oder Ackerflächen betreffen.

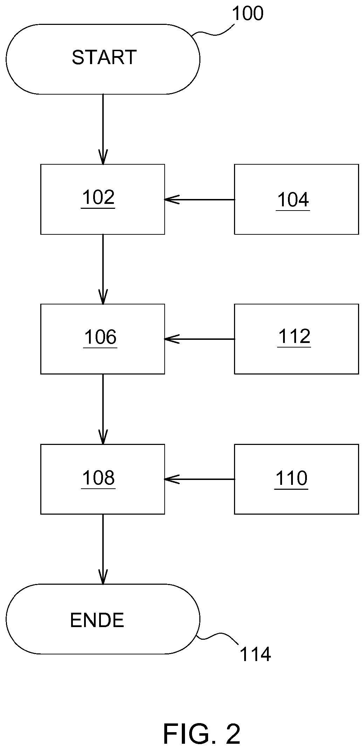

Fig. 2 zeigt ein Ausführungsbeispiel des erfindungsgemäßen Verfahrens in Gestalt eines Flussdiagramms.

Das in der Kontrolleinheit 26 ablaufende Verfahren wird in einem Initialisierungsschritt 100 bei Inbetriebnahme des landwirtschaftlichen Traktors 12 oder aber manuell über die Bedieneinheit 36 gestartet.

Daraufhin wird von der Kontrolleinheit 26 in einem ersten Hauptschritt 102 ein momentaner Arbeitszustand des landwirtschaftlichen Traktors 12 hinsichtlich des Vorliegens von mit der Durchführung von Transport-, Feld- und/oder Ladearbeiten des landwirtschaftlichen Traktors 12 in Zusammenhang stehenden Betriebsinformationen erfasst.

Bei den in einem ersten Nebenschritt 104 bereitgestellten Betriebsinformationen handelt es sich um in der Speichereinheit 46 abgelegte kartografische Informationen, den Arbeitszustand des an dem landwirtschaftlichen Traktor 12 angebrachten Anbaugeräts 24, Angaben hinsichtlich des Anbaugerätetyps, der momentanen Fahrtgeschwindigkeit des landwirtschaftlichen Traktors 12, des Aktivierungszustands eines Vorgewendemanagements, einer einzuhaltenden Fahrspur auf einem Feld, und dergleichen. Die entsprechenden Daten stehen der Kontrolleinheit 26 auf dem CAN-Datenbus 28 des landwirtschaftlichen Traktors 12 oder dem mit der Anbaugerätesteuerung 32 kommunizierenden ISOBUS-Datenbus 30 zur Verfügung.

In einem zweiten Hauptschritt 106 wird von der Kontrolleinheit 26 ein für den momentanen Arbeitszustand spezifischer Parametersatz zur Anpassung der Lenkcharakteristik des landwirtschaftlichen Traktors 12 aus einer Vielzahl vorgegebener und in der Speichereinheit 46 abgelegter Parametersätze ausgewählt.

Jeder der vorgegebenen Parametersätze wird seitens der Kontrolleinheit 26 durch einen oder mehrere Einzelparameter charakterisiert, wobei die Einzelparameter durch eine variable Lenkübersetzung zwischen dem Lenkrad 18 und den lenkbaren Vorderrädern 14 und/oder eine die Lenkradbetätigung überlagernde Betätigungskraft veränderbarer Größe und/oder eine variable Position lenkungsbegrenzender Endanschläge gegeben sind. Die diversen Einzelparameter stellen damit nichts anderes als mittels der Stelleinrichtung 40 ausführbare (passive) Lenkeingriffe dar.

Die Lenkübersetzung beschreibt hierbei das Verhältnis zwischen einem sich aus der Stellung des Lenkrads 18 ergebenden Einschlagwinkel α und dem an den lenkbaren Vorderrädern 14 hervorgerufenen Radstellwinkel δ.

Die mittels der Stelleinrichtung 40 überlagerbare Betätigungskraft führt je nach ihrem Vorzeichen zu einem eine Lenkradbetätigung erschwerenden Lenkwiderstand oder aber zu einer diese begünstigenden Lenkerleichterung. Letztere wird von der Stelleinrichtung 40 durch einen abnehmenden Lenkwiderstand erzeugt.

Die lenkungsbegrenzenden Endanschläge sind durch mechanische Stoppelemente gebildet, deren Position mittels der Stelleinrichtung 40 verändert werden kann. Davon abweichend werden diese von der Stelleinrichtung 40 durch Aufbau von im jeweiligen Endanschlagsbereich steil ansteigenden Betätigungskräften simuliert.

Der im zweiten Hauptschritt 106 von der Kontrolleinheit 26 entsprechend dem momentanen Arbeitszustand ausgewählte Parametersatz kann in einem dritten Hauptschritt 108 manuell über die Bedieneinheit 36 initiiert werden. Der betreffende Parametersatz wird von der Kontrolleinheit 26 auf dem von der Bedieneinheit 36 umfassten Display 38 in Form eines entsprechenden Vorschlags dargeboten. Durch Bestätigung des Vorschlags über die Bedieneinheit 36 kann der Fahrer dann den betreffenden Parametersatz zur Ausführung des eigentlichen Lenkeingriffs aktivieren.

Abweichend davon besteht im dritten Hauptschritt 108 auch die Möglichkeit, dass der entsprechend dem momentanen Arbeitszustand ausgewählte Parametersatz von der Kontrolleinheit 26 fahrerunabhängig initiiert wird. Hierzu ist die Kontrolleinheit 26 über die Bedieneinheit 36 zwischen einem halbautomatischen Modus mit manueller und einem vollautomatischen Modus mit selbsttätiger Aktivierung der Lenkeingriffe umschaltbar. Die Umschaltung erfolgt in einem zweiten Nebenschritt 110.

Erfindungsgemäß ist es möglich, dass der ausgewählte Parametersatz in einem dritten Nebenschritt 112 über die Bedieneinheit 36 hinsichtlich wenigstens eines Einzelparameters innerhalb vorgegebener Grenzen manuell und damit individuellen Vorlieben entsprechend konfiguriert wird. Grenzen der Konfigurierbarkeit werden unter anderem durch Aspekte der Fahrt- oder Betriebssicherheit des landwirtschaftlichen Traktors 12 wie auch eines daran angebrachten Anbaugeräts 24 gesetzt. Anschließend wird das erfindungsgemäße Verfahren von der Kontrolleinheit 26 in einem Schlussschritt 114 beendet. Abgesehen von der vorstehend dargestellten automatisierten Auswahl des Parametersatzes, ist es auch möglich, dass der momentane Arbeitszustand des landwirtschaftlichen Traktors 12 im ersten Hauptschritt 102 manuell vom Fahrer über eine Bedieneinheit 36 eingegeben wird, wobei von der Kontrolleinheit 26 die Eingabe erfasst sowie anschließend der zugehörige Parametersatz im zweiten Hauptschritt 106 zur entsprechenden Anpassung der Lenkcharakteristik ausgewählt wird.

Bezüglich der Anpassung der Lenkcharakteristik sind folgende Arbeitssituationen beispielhaft möglich:
So kann von der Kontrolleinheit 26 im ersten Hauptschritt 102 anhand der kartografischen Informationen durch Abgleich mit der momentanen Position des landwirtschaftlichen Traktors 12 auf das Befahren einer Straße einschließlich der Straßenart, mithin auf die Durchführung einer Straßentransportfahrt geschlossen werden. Zusätzlich wird von der Kontrolleinheit 26 eine für eine Straßentransportfahrt typische Fahrtgeschwindigkeit des landwirtschaftlichen Traktors 12 als Indikator herangezogen. In diesem Fall wird die Lenkcharakteristik mittels der Stelleinrichtung 40 dritten Hauptschritt 108 dahingehend angepasst, dass ein mit der Lenkradauslenkung sowie der momentanen Fahrtgeschwindigkeit zunehmender Lenkwiderstand aufgebaut wird. Da abrupt durchgeführte Lenkradbetätigungen gedämpft werden, wirkt dies stabilisierend auf die Fahreigenschaften des landwirtschaftlichen Traktors 12. Daneben wird die Lenkübersetzung verringert, sodass ein entsprechend gutmütiges Lenkverhalten erzielt wird.

Wird hingegen im ersten Hauptschritt 102 durch Vergleich der kartografischen Informationen mit der momentanen Position des landwirtschaftlichen Traktors 12 auf das Befahren eines Felds sowie ferner aufgrund des Arbeitszustands des an dem landwirtschaftlichen Traktor 12 angebrachten Anbaugeräts 24 auf die Durchführung bestimmter Feldarbeiten geschlossen, deren Art sich wiederum aus dem jeweiligen Anbaugerätetyp ergibt, so ist zur Erzielung gleichmäßiger Arbeitsergebnisse eine möglichst präzise Spurhaltung erwünscht. Die Anpassung der Lenkcharakteristik erfolgt dann im dritten Hauptschritt 108 durch entsprechende Ansteuerung der Stelleinrichtung 40 derart, dass die Lenkübersetzung zur Unterdrückung übermäßiger Lenkbewegungen verringert wird, eine der einzuhaltenden Fahrspur entsprechende virtuelle Rastposition durch Erzeugung einer Betätigungskraftsenke am Lenkrad 18 aufgebaut wird, und/oder eine von der einzuhaltenden Fahrspur wegweisende Lenkradauslenkung durch Aufbau eines zunehmenden Lenkwiderstands unterbunden bzw. deren Einhaltung durch Aufbau eines in der entgegengesetzten Lenkrichtung abnehmenden Lenkwiderstands gefördert wird. Die einzuhaltende Fahrspur ergibt sich dabei aus den kartografischen Informationen sowie aus der momentanen Position des landwirtschaftlichen Traktors 12, wohingegen der Arbeitszustand des Anbaugeräts 24 aus der Stellung des Dreipunkt-Geräteanbaus 22, dem Betätigungszustand zugehöriger Hydrauliksteuerventile (SCVs) oder einer zum Betreiben des Anbaugeräts 24 vorgesehenen Zapfwelle von der Kontrolleinheit 26 abgeleitet wird. Die entsprechenden Informationen stehen der Kontrolleinheit 26 auf dem CAN-Datenbus 28 zur Verfügung.

Im Vorgewende, also beim Wenden des landwirtschaftlichen Traktors 12 am Feldrand, gelten wiederum andere Anforderungen. Um den Fahrer bei der Durchführung des Wendevorgangs zu unterstützen, ist bei im ersten Hauptschritt 102 aktiviertem Vorgewendemanagement im dritten Hauptschritt 108 eine erhöhte Lenkübersetzung zur Verbesserung der Wendigkeit vorgesehen.

Auch in Zusammenhang mit im ersten Hauptschritt 102 erkannten Ladearbeiten mit einem an dem landwirtschaftlichen Traktor 12 angebrachten Frontlader wird im Hinblick auf eine verbesserte Wendigkeit des landwirtschaftlichen Traktors 12 eine erhöhte Lenkübersetzung bevorzugt, wobei diese im dritten Hauptschritt 108 der Kontrolleinheit 26 durch entsprechende Ansteuerung der Stelleinrichtung 40 im Falle beengter Platzverhältnisse innerhalb eines Schuppens oder dergleichen herabgesetzt sowie die variable Position der lenkungsbegrenzenden Endanschläge am Lenkrad 18 gegebenenfalls zusätzlich eingeengt wird. Ob sich der landwirtschaftliche Traktor 12 gerade im Freien oder in einem Schuppen befindet, wird von der Kontrolleinheit 26 im ersten Hauptschritt 102 aufgrund der entsprechenden kartografischen Informationen unschwer erkannt.

Der Vollständigkeit halber sei erwähnt, dass die Verwendung des beschriebenen Verfahrens grundsätzlich auch bei beliebigen anderen landwirtschaftlichen Nutzfahrzeugen vorstellbar ist. Jedoch ist dieses bei landwirtschaftlichen Traktoren aufgrund deren vielseitigen Einsatzmöglichkeiten von besonderem Vorteil. Bei der Fahrzeuglenkung kann es sich ferner um eine Steer-by-Wire-Lenkung handeln, diese kann aber ebenso gut auch von konventioneller Bauart sein.

## Patentansprüche

1. Verfahren zur Beeinflussung der Lenkcharakteristik eines landwirtschaftlichen Traktors, der ein Lenkrad (18) zur fahrerseitigen Vorgabe eines Radstellwinkels (δ) lenkbarer Traktorräder (14) sowie eine Stelleinrichtung (40) zur Erzeugung einer nach Maßgabe eines auswählbaren Parametersatzes anpassbaren Lenkcharakteristik aufweist, wobei von einer Kontrolleinheit (26) ein momentaner Arbeitszustand des landwirtschaftlichen Traktors (12) erfasst sowie ein für den momentanen Arbeitszustand spezifischer Parametersatz zur Anpassung der Lenkcharakteristik aus einer Vielzahl vorgegebener Parametersätze ausgewählt wird, **dadurch gekennzeichnet, dass** der ausgewählte Parametersatz über eine Bedieneinheit (36) hinsichtlich wenigstens eines Einzelparameters innerhalb vorgegebener Grenzen manuell konfiguriert werden kann.

2. Verfahren nach Anspruch 1, **dadurch gekennzeichnet, dass** jeder der vorgegebenen Parametersätze seitens der Kontrolleinheit (26) durch einen oder mehrere Einzelparameter charakterisiert wird, wobei die Einzelparameter durch eine variable Lenkübersetzung zwischen dem Lenkrad (18) und den lenkbaren Traktorrädern (14) und/oder eine die Lenkradbetätigung überlagernde Betätigungskraft veränderbarer Größe und/oder eine variable Position lenkungsbegrenzender Endanschläge gegeben sind.

3. Verfahren nach Anspruch 1 oder 2, **dadurch gekennzeichnet, dass** der momentane Arbeitszustand von der Kontrolleinheit (26) hinsichtlich des Vorliegens von mit der Durchführung von Transport-, Feld- und/oder Ladearbeiten des landwirtschaftlichen Traktors (12) in Zusammenhang stehenden Betriebsinformationen erfasst wird.

4. Verfahren nach wenigstens einem der Ansprüche 1 bis 3, **dadurch gekennzeichnet, dass** der momentane Arbeitszustand des landwirtschaftlichen Traktors (12) manuell vom Fahrer über eine Bedieneinheit (36) eingegeben werden kann.

5. Verfahren nach wenigstens einem der Ansprüche 1 bis 4, **dadurch gekennzeichnet, dass** der entsprechend dem momentanen Arbeitszustand ausgewählte Parametersatz manuell über eine Bedieneinheit (36) initiiert werden kann.

6. Verfahren nach wenigstens einem der Ansprüche 1 bis 4, **dadurch gekennzeichnet, dass** der entsprechend dem momentanen Arbeitszustand ausgewählte Parametersatz von der Kontrolleinheit (26) fahrerunabhängig initiiert wird.

## Claims

1. Method for influencing the steering characteristics of an agricultural tractor, which has a steering wheel (18) for the driver to preset a wheel positioning angle (δ) of steerable tractor wheels (14) and also a positioner (40) for producing steering characteristics that can be adapted on the basis of a selectable set of parameters, a momentary working state of the agricultural tractor (12) being sensed by a control unit (26) and a specific set of parameters for the momentary working state being selected from a multiplicity of preset sets of parameters for the adaptation of the steering characteristics, **characterized in that** the selected set of parameters can be configured manually by way of an operating unit (36) with regard to at least one individual parameter within preset limits.

2. Method according to Claim 1, **characterized in that** the control unit (26) characterizes each of the preset sets of parameters by one or more individual parameters, the individual parameters being given by a variable steering transmission between the steering wheel (18) and the steerable tractor wheels (14) and/or an actuating force that overlies the steering wheel actuation and is of variable magnitude and/or a variable position of steering-limiting end stops.

3. Method according to Claim 1 or 2, **characterized in that** the momentary working state is sensed by the control unit (26) with regard to the presence of operating information associated with the carrying out of transporting work, field work and/or loading work of the agricultural tractor (12).

4. Method according to at least one of Claims 1 to 3, **characterized in that** the momentary working state of the agricultural tractor (12) can be manually input by the driver by way of an operating unit (36).

5. Method according to at least one of Claims 1 to 4, **characterized in that** the set of parameters selected in accordance with the momentary working state can be manually initiated by way of an operating unit (36).

6. Method according to at least one of Claims 1 to 4, **characterized in that** the set of parameters selected in accordance with the momentary working state is initiated by the control unit (26) independently of the driver.

## Revendications

1. Procédé permettant d'influencer la caractéristique de direction d'un tracteur agricole qui présente un volant (18) pour la prédéfinition côté conducteur d'un angle de réglage de roue (δ) de roues de tracteur directrices (14) ainsi qu'un dispositif de réglage (40) pour la génération d'une caractéristique de direction pouvant être adaptée conformément à un ensemble de paramètres sélectionnable, une unité de contrôle (26) détectant un état de service instantané du tracteur agricole (12), et un ensemble de paramètres spécifique à l'état de service instantané étant sélectionné parmi une pluralité d'ensembles de paramètres prédéfinis pour l'adaptation de la caractéristique de direction,
**caractérisé en ce que** l'ensemble de paramètres sélectionné peut être configuré manuellement par l'intermédiaire d'une unité de commande (36) quant à au moins un paramètre individuel dans des limites prédéfinies.

2. Procédé selon la revendication 1, **caractérisé en ce que** chacun des ensembles de paramètres prédéfinis est caractérisé du côté de l'unité de contrôle (26) par un ou plusieurs paramètres individuels, les paramètres individuels étant donnés par un rapport de direction variable entre le volant (18) et les roues de tracteur directrices (14), et/ou par une force d'actionnement de grandeur modifiable, superposée à l'actionnement de volant, et/ou par une position variable de butées de fin de course limitant la direction.

3. Procédé selon la revendication 1 ou 2, **caractérisé en ce que** l'état de service instantané est détecté par l'unité de contrôle (26) quant à la présence d'informations de fonctionnement concernant l'exécution de travaux de transport, de champ et/ou de chargement du tracteur agricole (12).

4. Procédé selon au moins l'une des revendications 1 à 3, **caractérisé en ce que** l'état de service instantané du tracteur agricole (12) peut être saisi manuellement par le conducteur par l'intermédiaire d'une unité de commande (36).

5. Procédé selon au moins l'une des revendications 1 à 4, **caractérisé en ce que** l'ensemble de paramètres sélectionné selon l'état de service instantané peut être initié manuellement par l'intermédiaire de l'unité de commande (36).

6. Procédé selon au moins l'une des revendications 1 à 4, **caractérisé en ce que** l'ensemble de paramètres sélectionné selon l'état de service instantané peut être initié par l'unité de contrôle (26) indépendamment du conducteur.
